# EUROPEAN PATENT APPLICATION

(11) **EP 3 035 323 A1**
(43) Date of publication of application: **22.06.2016**
(21) Application number: 15200234.1
(22) Date of filing: 15.12.2015
(51) Int. Cl.: G09G 3/20, G09G 5/02, H04N 7/01, H04N 21/4402

(54) **DISPLAY APPARATUS AND CONTROLLING METHOD**

(30) Priority: 18.12.2014 KR 20140183430
(71) Applicant: Samsung Electronics Co., Ltd, Gyeonggi-do 16677 (KR)
(72) Inventor: KIM, Ji-won, Seoul (KR)
(74) Representative: Appleyard Lees IP LLP

(57) **Abstract**

A display apparatus (100) is provided. The display apparatus includes a display (110) for displaying an input image (210) and a processor (120) to, in response to a space (220, 230) being displayed with the input image, analyze color information of an area (220-1, 230-1) in the input image, which is adjacent to the space, generate a partial image (220, 230, 320, 330) in a same size as the space based on the analyzed color information, and display the partial image on the space.

## Description

### CROSS-REFERENCE TO RELATED APPLICATIONS

This application claims priority from Korean Patent Application No. 10-2014-0183430, filed in the Korean Intellectual Property Office on December 18, 2014, the disclosure of which is incorporated herein by reference.

### BACKGROUND OF THE INVENTION

### 1. Field of the Invention

Aspects of the exemplary embodiments relate to display apparatuses and controlling methods thereof, and more particularly, to display apparatuses which process an input image to fit a screen ratio and controlling methods thereof.

### 2. Description of the Related Art

With the development of electronic technologies, various types of electronic products have been developed and distributed. In particular, various display apparatuses such as TV, mobile phone, PC, notebook PC and PDA are widely used.

As such display apparatuses are widely used, users' needs for various functions have been increasing. Accordingly, manufacturers have made efforts to satisfy the increasing needs of users, introducing products with new functions.

In particular, as the screens of display apparatuses are provided in various sizes, technologies to convert an input image to fit the ratio of the various screens have been developed. However, in order to convert an input image to a proper screen ratio, the original image should be processed and, during this processing, an image quality may be compromised and resources may be wasted.

Thus, there is a need for processing an input image such that the size of the input image is maintained while a space is processed more naturally.

### SUMMARY

Exemplary embodiments relate to a display apparatus which generates a partial image when a space is displayed and displays the partial image on the space, and a controlling method thereof.

According to an exemplary embodiment, there is provided a display apparatus including a display configured to display an input image and a processor configured to, in response to a space being displayed with the input image, analyze color information of an area in the input image, which is adjacent to the space, generate a partial image in a same size as the space based on the analyzed color information, and display the partial image on the space.

The processor may determine a color having a highest proportion in the area based on the analyzed color information and generates the partial image having a same color as the determined highest proportion color.

The processor may generate the partial image by gradation-processing the same color.

The processor may generate the partial image by performing gradation-processing such that the same color becomes darker as a distance in the partial image from the displayed image increases.

The processor may analyze color information of a first area of the input image, which is adjacent to a first space on a left side outside the input image, generate a first partial image having a first same color as a highest first proportion based on the analyzed color information of the first area, and display the first partial image on the first space, and the processor may analyze color information of a second area of the input image, which is adjacent to a second space on a right side outside the input image, generate a second partial image having a second same color as a color of a highest second proportion based on the analyzed color information of the second area, and display the second partial image on the second space.

The processor may generate the partial image as an On Screen Display (OSD) image and displays the OSD image on the space.

The processor may replace an image displayed on the space with the partial image and displays the partial image.

According to an exemplary embodiment, there is provided a method of controlling a display apparatus including, in response to a space being displayed along with the input image, analyzing color information of an area of the input image, which is adjacent to the space, and generating a partial image in a same size as the space based on the analyzed color information and displaying the partial image on the space.

The generating the partial image may include determining a color having a highest proportion in the area based on the analyzed color information and generating the partial image having a same color as the determined highest proportion color.

The generating the partial image may include generating the partial image by gradation-processing the same color.

The generating the partial image may include performing gradation-processing such that the color becomes darker as a distance in the partial image from the displayed image increases.

The generating the partial image may include analyzing color information of a first area of the input image, which is adjacent to a first space on a left side outside the input image, generating a first partial image having a first same color as a highest first proportion based on the analyzed color information of the first area, and displaying the first partial image on the first space, and the generating a partial image may include analyzing color information of a second area of the input image, which is adjacent to a second space on a right side outside the input image, generating a second partial image having a second same color as a color of a highest second proportion based on the analyzed color information of the second area, and displaying the second partial image on the second space.

The displaying the partial image on a space may include generating the partial image as an On Screen Display (OSD) image and displaying the OSD image on the space.

The displaying the partial image on a space may include replacing an image displayed on the space with the partial image and displaying the partial image.

According to an exemplary embodiment, there is provided a display apparatus having a display configured to display an input image and a partial image, and a processor configured to analyze color information of an area of the input image, determine a highest proportion of a color of the area, and generate the partial image based on the analyzed color information, where the area is adjacent to a space of the input image, and the partial image is displayed in the space.

The partial image may be generated having a color which is the same as the color having the highest proportion.

The partial image may have a same size as the space.

According to an exemplary embodiment, there is provided method of controlling a display apparatus, the method including receiving an input image, determining if a space is contained in the input image, analyzing an area of the input image, determining a highest proportion of a color of the area, generating a partial image based on the analyzed color information, and displaying the input image and the partial image.

The partial image may be generated having a color which is the same as the color having the highest proportion.

The partial image may be displayed in the space outside the input image.

According to the above-described various exemplary embodiments, a partial image in the similar color to an image input to a space is displayed and thus, a viewer may be more immersed in a screen.

### BRIEF DESCRIPTION OF THE DRAWINGS

The above and/or other aspects of the present inventive concept will be more apparent by describing certain exemplary embodiments with reference to the accompanying drawings, in which:
FIG. 1 is a block diagram illustrating configuration of a display apparatus according to an exemplary embodiment;
FIG. 2 is a view provided to explain processing of a processor according to an exemplary embodiment;
FIG. 3 is a view illustrating a partial image which is gradation-processed according to an exemplary embodiment;
FIG. 4 is a view illustrating that an input image and a generated partial image are displayed together according to an exemplary embodiment; and
FIG. 5 is a flowchart provided to explain a method for controlling a display apparatus according to an exemplary embodiment.

### DETAILED DESCRIPTION

Reference will now be made in detail to exemplary embodiments, examples of which are illustrated in the accompanying drawings, wherein like reference numerals refer to like elements throughout. In this regard, the present exemplary embodiments may have different forms and should not be construed as being limited to the descriptions set forth herein. Accordingly, the exemplary embodiments are merely described below, by referring to the figures, to explain aspects of the present description. Expressions such as "at least one of," when preceding a list of elements, modify the entire list of elements and do not modify the individual elements of the list.

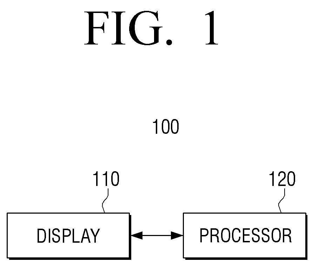

FIG. 1 is a block diagram illustrating a configuration of a display apparatus according to an exemplary embodiment.

Referring to FIG. 1, the display apparatus 100 includes a display 110 and a processor 120. The display apparatus 100 may be from a variety apparatuses such as a TV, an electronic black board, an electronic table, a Large Format Display (LFD), a smart phone, a tablet, a desktop PC, a notebook PC, an Electrophoretic Display (EPD), an E-PAPER, etc.

The display 110 may display an input image. For example, the input image may be a still image, a photo, a document, and a moving image, and the display apparatus 100 may be one of a Liquid Crystal Display (LCD), an Organic Light Emitting Display (OLED), a Plasma Display Panel (PDP), etc. to display the input image.

If a space is displayed along with an input image, the processor 120 may analyze color information of an area of the input image adjacent to the space.

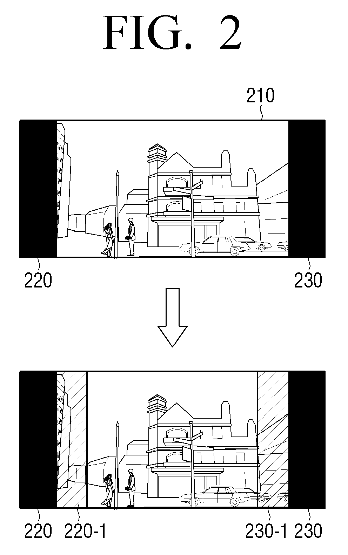

Subsequently, the processor 120 may control the generation of a partial image in the same size as the space based on the analyzed color information and display the partial image on the space, which will be described in detail with reference to FIG. 2.

FIG. 2 is a view provided to explain processing of a processor according to an exemplary embodiment.

Referring to FIG. 2, if spaces 220, 230 are displayed along with input images 210, the processor 210 may analyze color information of areas 220-1, 230-1 which are areas adjacent to the spaces 220, 230 from among the displayed images 210.

Specifically, the processor 120 may analyze color information of areas 220-1, 230-1 adjacent to the spaces 220, 230 and determine a color of the highest proportion based on the analyzed color information.

For example, the processor 120 may determine a color of the highest proportion based on a pixel value of pixels which constitute the adjacent areas 220-1, 230-1.

Subsequently, the processor 120 generates a partial image including the same color as the color which is determined to be the color of the highest proportion and displays the partial image on the spaces 220, 230.

For example, if it is determined that a color of the highest proportion is blue based on the analysis of color information of the area 220-1 adjacent to the space 220, the processor 120 may generate a partial image including the blue color. Here, the generated partial image may have the same size as the space 220.

Alternatively, if it is determined that a color of the highest proportion is green based on the analysis of color information of the area 230-1 adjacent to the space 230, the processor 120 may generate a partial image including the green color. Here, the generated partial image may have the same size as the space 230.

Subsequently, the processor 120 may display the generated partial image including the blue color on the space 220 and display the generated partial image including the green color on the space 230.

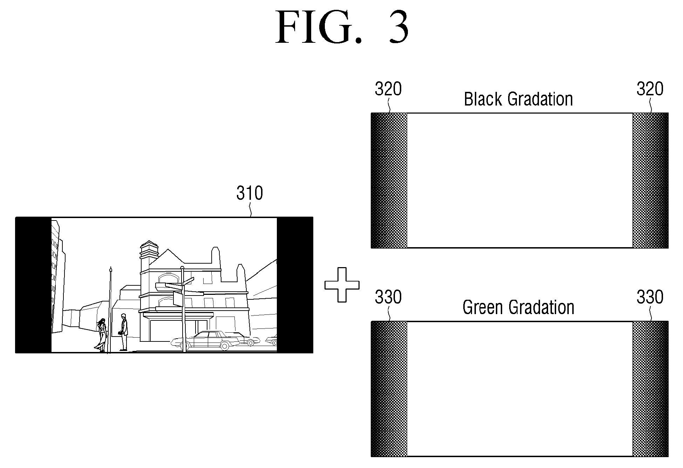

Meanwhile, the processor 120 may analyze color information of an area of an image, which is adjacent to a space, and generate a partial image by gradation-processing the same color as the color which is determined to be the color of the highest proportion based on the analyzed color information, which will be described in detail with reference to FIG. 3.

FIG. 3 is a view illustrating a partial image which is gradation-processed according to an exemplary embodiment.

Referring to FIG. 3, if a space (shown in black) is displayed along with an input image 310, the processor 120 may analyze color information of an area of the input image, which is adjacent to the space, determine a color of the highest proportion based on the analyzed color information, and generate partial images 320, 330 by gradation-processing the same color as the color determined to be the highest proportion.

For example, if a color of the highest proportion is determined to be black based on the analysis of color information of an area of the displayed image 310, which is adjacent to the space, the processor 120 may generate the partial image 320 where the black color is gradation-processed, and if a color of the highest proportion is determined to be green based on the analysis of color information of an area of the displayed image 310, which is adjacent to the space, the processor 120 may generate the partial image 330 where the green color is gradation-processed.

In particular, the processor 120 may generate a partial image by performing gradation-processing such that the color of the partial image gets darker as a distance from the displayed image 310 increases.

Referring to FIG. 3, the processor 120 generates partial images 320, 330 by having a light black color or green color in the areas closest to the displayed image 310 and having a darker black color or green color in the areas more distant from the displayed image 310.

The above gradation-processing is performed to connect the boundaries of the displayed image 310 and the partial images 320, 330 smoothly when the displayed image 310 and the partial images 320, 330 are displayed together, thereby allowing a viewer to be more immersed in the images.

The processor 120 may generate a partial image to be the same size as a space. More specifically, the processor 120 may calculate a size of the space by comparing a resolution of an input image with a size of the display 110 of the display apparatus 100, and may select an area having a same size as the size of the calculated space from among areas adjacent to the space in the input image and analyze color information of the selected space.

The size of a partial image which is generated by a user setting may vary.

The processor 120 may analyze color information of each of the adjacent areas for a space, and generate each partial image based on the analyzed color information.

Specifically, the processor 120 may analyze color information of a first area of an input image, which is adjacent to a first space in a left side outside the input image, generate a first partial image including the same color as a color which is determined to be the color of the highest proportion based on the analyzed color information, and display the first partial image on the first space.

The processor 120 may analyze color information of a second area of an input image, which is adjacent to a second space in a right side outside the input image, generate a second partial image including the same color as a color which is determined to be the color of the highest proportion based on the analyzed color information, and display the second partial image on the second space.

Here, the analyzed color information of the first area of an input image, which is adjacent to the first space may be different from the analyzed color information of the second area of an input image, which is adjacent to the second area and accordingly, the processor 120 may generate partial images which include a different color, respectively.

If the size of the first space is different from the size of the second space, the processor 120 may generate partial images in a different size, respectively.

In the above description, the first space and the second space are provided in the left side and the right side of an image, respectively, but the locations of the first space and the second space are not limited thereto. The first space and the second space may be provided in an upper side and a lower side or in one of upper, lower, left, and right sides.

The processor 120 may generate a generated partial image as an On Screen Display (OSD) and display the OSD image on a space. In other words, the processor 120 may generate the partial images which have been described above with reference to FIGS. 2 and 3 as OSD images and display the OSD images on the space.

The processor 120 may generate a generated partial image not only as an OSD image but also as a Picture In Picture (PIP) image and display the OSD image on the space.

The processor 120 may synthesize a generated partial image with an input image and display the synthesized image.

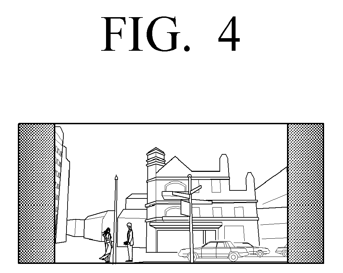

FIG. 4 is a view illustrating that an input image and a generated partial image are displayed together according to an exemplary embodiment.

Referring to FIG. 4, the partial images which are generated in the left side and the right side of an input image are generated and the boundaries between the input image and a space become smooth.

Here, the processor 120 may generate a partial image as an OSD image and display the OSD image on the space, or may replace an image displayed on the space as a partial image.

Meanwhile, in the above exemplary embodiment, the processor 120 generates a generated partial image as an OSD image and displays the OSD image on a space, or replaces a space with a partial image, but this is only an example. The processor 120 may adjust transparency and display a partial image to overlap with a space.

In addition, the processor 120 may display information regarding an image which is input to a generated partial image on a space. For example, the processor 120 may display information regarding play time or the remaining play time of an image input to a generated partial image on a space.

Meanwhile, a processor is generally an element to control an apparatus, and may be used together with a CPU, a microprocessor, a controller, etc. A processor controls overall operations of an apparatus, and may be realized as a single chip system (System-on-a-chip or System on chip, SOC, SoC, etc.).

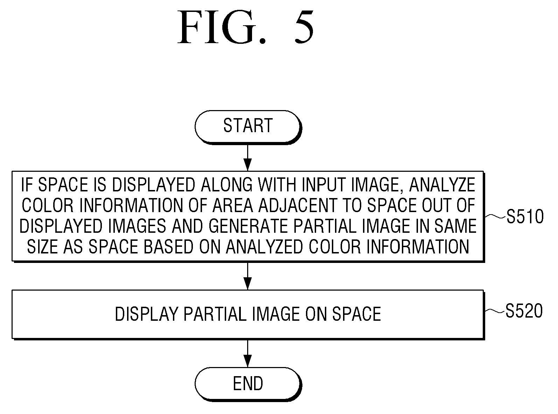

FIG. 5 is a flowchart provided to explain a controlling method of a display apparatus according to an exemplary embodiment.

According to the method illustrated in FIG. 5, if a space is displayed along with an input image, color information of an area of the displayed image, which is adjacent to the space, is analyzed and a partial image having the same size as the space is generated based on the analyzed color information (S510).

Subsequently, the partial image is displayed on the space (S520).

Here, the step of generating a partial image may include determining a color of the highest proportion based on the analyzed color information and generating a partial image including the same color as the color which is determined to be the color of the highest proportion.

The step of generating a partial image may include generating a partial image by gradation-processing the same color as the color which is determined to be the color of the highest proportion.

The step of generating a partial image may include a step of performing gradation-processing such that the color gets darker as a distance of the partial image from the displayed image increases.

In addition, the step of generating a partial image may include analyzing color information of the first area of an input image, generating the first partial image having the same color as a color determined to be the color of the highest proportion based on the analyzed color information, displaying the first partial image on the space, analyzing color information of the second area, , generating the second partial image having the same color as a color which is determined to be the color of the highest proportion, and displaying the second partial image on the second space.

The step of displaying a partial image on a space may include generating a partial image as an OSD image and displaying the OSD image on the space.

In addition, the step of displaying a partial image on a space may include replacing an image displayed on the space with a partial image and displaying the partial image.

A non-transitory computer readable medium storing a program for performing the controlling method according to an exemplary embodiment may be provided.

For example, a non-transitory computer readable medium storing a program which, if an input image is displayed along with a space, analyzes color information of an area of the input image, which is adjacent to the space, and generates a partial image in the same size as the space based on the analyzed color information may be provided.

The non-transitory recordable medium refers to a medium which may store data semi-permanently rather than storing data for a short time. Specifically, the above-described various programs may be stored and provided in a non-transitory recordable medium such as CD, DVD, hard disk, Blu-ray disk, USB, memory card, ROM, etc.

In addition, the above block diagram illustrating a display apparatus does not illustrate a bus, but communication between each element of the display apparatus may be performed through a bus. In addition, each device may further include a processor for performing the above-described various steps such as CPU, microprocessor, etc.

The foregoing embodiments and advantages are merely exemplary and are not to be construed as limiting. The present exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A display apparatus (100), comprising:
a display (110) configured to display an input image (210); and
a processor (120) configured to, in response to a space (220, 230) being displayed with the input image, analyze color information of an area (220-1, 230-1) in the input image, generate a partial image (220, 230, 320, 330) having a same size as the space based on the analyzed color information, and display the partial image on the space, wherein
the area is adjacent to the space.

2. The apparatus (100) as claimed in claim 1, wherein the processor (120) determines a color having a highest proportion in the area (220-1, 230-1) based on the analyzed color information and generates the partial image (220, 230, 320, 330) having a same color as the determined highest proportion color.

3. The apparatus (100) as claimed in claim 2, wherein the processor (120) generates the partial image (220, 230, 320, 330) by gradation-processing the same color.

4. The apparatus (100) as claimed in claim 3, wherein the processor (120) generates the partial image (220, 230, 320, 330) by performing gradation-processing such that the same color becomes darker as a distance in the partial image from the displayed image (210) increases.

5. The apparatus (100) as claimed in claim 3 or 4, wherein the processor (120) analyzes color information of a first area (220-1) of the input image (210) which is adjacent to a first space (220) on a left side outside the input image, generates a first partial image having a first same color as a highest first proportion based on the analyzed color information of the first area, and displays the first partial image on the first space,
wherein the processor analyzes color information of a second area (230-1) of the input image which is adjacent to a second space (230) on a right side outside the input image, generates a second partial image having a second same color as a color of a highest second proportion based on the analyzed color information of the second area, and displays the second partial image on the second space.

6. The apparatus (100) as claimed in any one of claims 1 to 5, wherein the processor (120) generates the partial image (220, 230, 320, 330) as an On Screen Display (OSD) image and displays the OSD image on the space.

7. The apparatus (100) as claimed in any one of claims 1 to 6, wherein the processor (120) replaces an image displayed on the space (220, 230) with the partial image and displays the partial image.

8. A method of controlling a display apparatus (100), the method comprising:
in response to a space (220, 236) being displayed along with the input image (210), analyzing color information of an area (220-1, 230-1) in the input image;
generating a partial image in a same size as the space based on the analyzed color information; and
displaying the partial image on the space, wherein
the area is adjacent to the space.

9. The method as claimed in claim 8, wherein the generating the partial image (220, 230, 320, 330) comprises determining a color having a highest proportion in the area (220-1, 230-1) based on the analyzed color information and generating the partial image having a same color as the determined highest proportion color.

10. The method as claimed in claim 9, wherein the generating the partial image (220, 230, 320, 330) comprises generating the partial image by gradation-processing the same color.

11. The method as claimed in claim 10, wherein the generating the partial image (220, 230, 320, 330) comprises performing gradation-processing such that the color becomes darker as a distance in the partial image from the displayed image increases.

12. The method as claimed in claim 10 or 11, wherein the generating the partial image (220, 230, 320, 330) comprises analyzing color information of a first area (220-1) of the input image (210) which is adjacent to a first space on a left side outside the input image, generating a first partial image having a first same color as a highest first proportion based on the analyzed color information of the first area, and displaying the first partial image on the first space,
wherein the generating a partial image comprises analyzing color information of a second area (230-1) of the input image which is adjacent to a second space on a right side outside the input image, generating a second partial image having a second same color as a color of a highest second proportion based on the analyzed color information of the second area, and displaying the second partial image on the second space.

13. The method as claimed in any one of claims 8 to 12, wherein the displaying the partial image (220, 230, 320, 330) on a space comprises generating the partial image as an On Screen Display (OSD) image and displaying the OSD image on the space.

14. The method as claimed in any one of claims 8 to 13, wherein the displaying the partial image (220, 230, 320, 330) on a space comprises replacing an image displayed on the space with the partial image and displaying the partial image.
